(19) Europäisches Patentamt
European Patent Office
Office européen des brevets

(11) **EP 3 528 996 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **17800397.6**

(22) Anmeldetag: **20.10.2017**

(51) Internationale Patentklassifikation (IPC):
**B23K 37/02** (2006.01)   **B23K 37/04** (2006.01)
**B23K 26/08** (2014.01)   **B23K 26/16** (2006.01)
**B23K 26/38** (2014.01)   **B26F 3/00** (2006.01)
**G05B 19/4093** (2006.01)   **G05B 19/41** (2006.01)
**B23K 101/18** (2006.01)

(52) Gemeinsame Patentklassifikation (CPC):
**B23K 26/38; B23K 26/0876; B23K 26/16;**
**B23K 37/0235; B23K 37/0461; B26F 3/004;**
B23K 2101/18

(86) Internationale Anmeldenummer:
**PCT/EP2017/076925**

(87) Internationale Veröffentlichungsnummer:
**WO 2018/077763 (03.05.2018 Gazette 2018/18)**

(54) **VERFAHREN ZUR VORHERSAGE DER KIPPNEIGUNG EINES FREIGESCHNITTENEN WERKSTÜCKTEILS UND BEARBEITUNGSMASCHINE ZUR TRENNENDEN BEARBEITUNG EINES PLATTENFÖRMIGEN WERKSTÜCKS**

METHOD FOR PREDICTING THE TILT INCLINATION OF A WORKPIECE PART BEING CUT FREE, AND MACHINE TOOL FOR MACHINING A PLANAR WORKPIECE

PROCÉDÉ PERMETTANT DE PRÉVOIR UNE TENDANCE AU BASCULEMENT D'UNE PARTIE DE PIÈCE DÉCOUPÉE ET MACHINE D'USINAGE POUR L'USINAGE PAR DÉCOUPAGE D'UNE PIÈCE EN FORME DE PLAQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2016 DE 102016220844**

(43) Veröffentlichungstag der Anmeldung:
**28.08.2019 Patentblatt 2019/35**

(73) Patentinhaber: **Trumpf Werkzeugmaschinen GmbH + Co. KG**
**71254 Ditzingen (DE)**

(72) Erfinder:
• **KRENZ, Carsten**
**70771 Leinfelden-Echterdingen (DE)**

• **OTTNAD, Jens**
**76199 Karlsruhe (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
**WO-A1-2007/134631      DE-A1-102012 212 566**
**DE-A1-102013 226 818      US-A1- 2010 193 479**

• **DATABASE WPI Week 198507 Thomson Scientific, London, GB; AN 1985-042998 XP002778655, -& SU 1 101 402 A (DAGESTAN POLY) 7. Juli 1984 (1984-07-07)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Vorhersage der Kippneigung eines bei einer trennenden Bearbeitung mittels einer Bearbeitungsmaschine aus einem Restwerkstück freigeschnittenen und auf einem oder mehreren Auflagern aufliegenden Werkstückteils. Weiterhin betrifft die Erfindung eine Bearbeitungsmaschine zur trennenden Bearbeitung eines plattenförmigen Werkstücks mittels eines Bearbeitungsstrahls mit einem den Bearbeitungsstrahl, insbesondere Laserstrahl, auf das plattenförmige Werkstück ausrichtenden Bearbeitungskopf.

Beim Freischneiden von Werkstückteilen auf einer Laserschneidanlage, beispielsweise einer Flachbettschneidanlage, einer kombinierten Laser-Stanz-Maschine oder Hybridanlagen, können die freigeschnittenen Werkstückteile durch ihre Gewichtskraft und/oder durch die Einwirkung des Schneidgasdrucks verkippen. Dies kann in Folgeprozessen zu Problemen führen. Beim Schneiden weiterer Werkstückteile kann es zu Kollisionen kommen oder das Werkstückteil kann nicht mehr automatisiert von der Maschine entnommen werden.

Aus der DE 10 2013 226 818 A1 ist eine Maschine zum trennenden Bearbeiten eines plattenförmigen Werkstücks mittels eines Bearbeitungsstrahls bekannt. Die Maschine weist zwei Werkstückauflageflächen zur Auflage des Werkstücks auf, zwischen denen ein sich entlang einer Richtung erstreckender Spalt gebildet ist. Innerhalb des Spalts sind mindestens zwei unabhängig voneinander verfahrbare Unterstützungsschlitten angeordnet, die jeweils eine Auflagefläche zur Unterstützung von beim trennenden Bearbeiten geschnitten Werkstückteilen aufweisen. Es hat sich gezeigt, dass diese Unterstützungsschlitten nicht ausreichend sind, um ein Verkippen von ausgeschnittenen Werkstückteilen sicher zu vermeiden, wenn die jeweilige Freischneideposition der Werkstückteile an einer falschen Stelle gewählt wird.

Die WO 2007/134631 A1 offenbart ein Verfahren zur Optimierung einer Anordnung von Tragpunktspitzen an Auflageelementen einer Werkstückauflage zur Aufnahme eines insbesondere tafelförmigen Werkstücks in einer Bearbeitungsanlage, bei dem das Werkstück mit einem Schneidstrahl bearbeitet wird, wobei Daten einer Schachtelung von zumindest einem Gut- und Restteil von der zumindest einen, zur Bearbeitung anstehenden Tafelbelegung in Bezug auf eine Flächengeometrie des zumindest einen Gutteils und einem Verlauf des Schneidspaltes erfasst werden und die Lage und Anzahl der Tragpunktspitzen ermittelt und den Auflageelemente zugeordnet werden und dass an jedem zugeordneten Auflageelement mit zumindest einer Tragpunktspitze eine Positionsnummer zum Einbau im Rahmen der Werkstückauflage versehen wird.

In der US 2010/0193479 A1 (Basis für den Oberbegriff der Ansprüche 1 und 11) ist beschrieben, dass der Schwerpunkt des freigeschnittenen Werkstücks bestimmt wird und ein Bereich um dieses freigeschnittene Werkstück herum betrachtet wird und anschließend bewertet wird, ob der Schwerpunkt innerhalb dieses Bereichs liegt oder nicht.

Die SU 1101402 A1 offenbart, die Last an einem Kran zu berücksichtigen, um ein Kippmoment zu bestimmen.

Ein weiteres Verfahren zur trennenden Bearbeitung eines plattenförmigen Werkstücks ist aus der DE 10 2012 212 566 A1 bekannt.

Aufgabe der vorliegenden Erfindung ist es, ein Verfahren und eine Bearbeitungsmaschine bereit zu stellen, mit denen es möglich ist, ein Verkippen von freigeschnittenen Werkstückteilen zu vermeiden.

Gelöst wird diese Aufgabe gemäß einem ersten Aspekt der Erfindung durch ein Verfahren zur Vorhersage der Kippneigung eines bei einer trennenden Bearbeitung mittels einer Bearbeitungsmaschine aus einem Restwerkstück frei geschnittenen und auf einem oder mehreren Auflagern aufliegenden Werkstückteils mit den Verfahrensschritten des Patentanspruchs 1.

Es wird also zunächst analysiert, um welche möglichen Kippkanten ein freigeschnittenes Werkstückteil kippen könnte. Dann werden unterschiedliche Zustände der Bearbeitungsmaschinewird analysiert und bewertet, welche Kippmomente auf das Werkstückteil in den unterschiedlichen Zuständen wirken könnten. Beispielsweise ist ein Zustand der Bearbeitungsmaschine die Werkstückbearbeitung, bei der beispielsweise ein Schneidgas aus einem Bearbeitungskopf austritt und im Moment des Freischnitts in einer Freischneideposition auf das Werkstückteil einwirkt. Andere Kippmomente wirken auch dann auf das Werkstückteil, wenn das Schneidgas abgeschaltet ist.

Es werden die durch die Gewichtskraft des Werkstückteils und die durch die Prozesskraft eines auf das Werkstückteil an einer Freischneideposition einwirkenden Fluids (z.B. Wasser oder Schneidgas) ausgeübten Kippmomente (M1 - M4) ermittelt. Je nach dem Verhältnis der wirkenden Kräfte bzw. Kippmomente kann es sein, dass in einem Bearbeitungszustand ein Kippen vermieden wird, weil das ausströmende Gas ein Kippen des Werkstücks aufgrund dessen Eigengewichts verhindert. Andererseits kann das Gas eine so große Kraft auf das Werkstückteil ausüben, dass das Gas für ein Kippen des Werkstückteils verantwortlich ist, das nicht kippen würde, wenn kein Gas auf das Werkstückteil strömen würde. Die Freischneideposition ist dabei die Position, an der die letzte Verbindung des Werkstückteils zum Restwerkstück getrennt wird. Bei dem freigeschnittenen Werkstückteil kann es sich sowohl um ein Gutteil als auch um ein Restteil handeln, das entsorgt werden muss.

Anhand der ermittelten Kippmomente kann dann ermittelt werden, ob es einen Maschinenzustand gibt, in dem das Werkstückteil um eine Kippkante kippen würde. Wenn dies vorhergesagt wird, können entsprechende Maßnahmen ergriffen werden, um ein solches Kippen zu verhindern. Beispielsweise kann eine andere Freischneideposition gewählt werden, oder es kann ein Auflager anders positioniert werden, oder das Werkstück kann anders auf den Auflagern angeordnet werden, um ein Kippen eines ausgeschnittenen Werkstückteils zu vermeiden.

Die Kippkante kann in Abhängigkeit davon ermittelt werden, ob das ausgeschnittene Werkstückteil auf einem oder mehreren Auflagern aufliegt. Liegt das Werkstückteil nur auf einem Auflager auf, so kann als Kippkante die Schnittlinie des Werkstückteils mit einer Auflagerkante bestimmt werden.

Wenn das Werkstückteil auf mehreren Auflagern aufliegt, die voneinander beabstandet sind, so können die Anteile des Werkstückteils, die zwischen Auflagern angeordnet sind, ausgeblendet werden und die konvexe Hülle des verbleibenden Werkstückteils bestimmt werden, wobei die Kippkanten als diejenigen Verbindungsgeraden von den Schnittpunkten der konvexen Hülle mit den Auflagerkanten bestimmt werden, die auf der Außengeometrie der konvexen Hülle liegen. Verbindungsgeraden, die in der konvexen Hülle liegen oder diese schneiden, sind keine Kippkanten.

Wenn beispielsweise das freigeschnittene Werkstückteil auf zwei Auflagern aufliegt, werden die Anteile des Werkstückteils zwischen den Auflagern ausgeblendet. Aus den restlichen Punkten des freigeschnittenen Werkstückteils wird die konvexe Hülle gebildet und diese mit den Kanten der Auflager geschnitten. Somit ergeben sich vier Schnittpunkte. Jeweils zwei dieser Schnittpunkte können durch eine Gerade verbunden werden. Die Geraden bilden die Kippkanten. In diesem Fall wird also an zwei unterschiedlichen Kippkanten überprüft, ob das freigeschnittene Werkstückteil voraussichtlich kippen würde.

Zum Ermitteln der auf das Werkstückteil an den Kippkanten wirkenden Kippmomente können die Gewichtskraft des freigeschnittenen Werkstückteils, der Schwerpunkt des Werkstückteils und der Abstand des Schwerpunkts von einer Kippkante, insbesondere von jeder Kippkante, ermittelt werden. Der Abstand des Schwerpunkts von der Kippkante stellt den Hebelarm dar, der verwendet werden kann, um ein durch die Gewichtskraft des Werkstückteils verursachtes Kippmoment an der Kippkante zu ermitteln.

Außerdem kann für die Ermittlung der Kippmomente eine in der Freischneideposition wirkende Prozesskraft, insbesondere eine Gaskraft eines aus einem Bearbeitungskopf austretenden und auf das freigeschnittene Werkstückteil auftreffenden Schneidgases, ermittelt werden. Grundsätzlich ist das Verfahren für jegliche Art von Bearbeitungsstrahl anwendbar. Es kann sich dabei um einen Hochenergiestrahl, beispielsweise in Form eines Plasmalichtbogens oder eines Wasserstrahls handeln. Besonders bevorzugt ist es jedoch, wenn es sich bei dem Bearbeitungsstrahl um einen Laserstrahl handelt. Beim Laserschneiden wird ein Schneidgas verwendet, welches auf das Werkstück trifft. Somit wird durch das austretende Schneidgas eine Kraft auf das Werkstück ausgeübt, welche zum Verkippen des Werkstücks führen könnte. Näherungsweise kann diese Gaskraft als das Produkt aus dem Gasdruck und dem Düsenquerschnitt einer Bearbeitungsdüse eines Bearbeitungskopfes ermittelt werden. Es ist auch denkbar, die Gaskraft durch detailliertere Modelle genauer zu ermitteln.

Weiterhin kann vorgesehen sein, dass der Abstand der Freischneideposition zu einer Kippkante, insbesondere zu jeder Kippkante, ermittelt wird. Dieser Abstand stellt somit den Hebelarm dar, der zur Berechnung eines Kippmoments verwendet werden kann, das sich ergibt, wenn in der Freischneideposition eine Kraft auf das freigeschnittene Werkstückteil wirkt, wie beispielsweise eine Prozesskraft, insbesondere eine Gaskraft.

Aus den durch die Gewichtskraft und die Gaskraft verursachten Kippmomenten kann ein Kippmomentengleichgewicht an der oder den Kippkante(n) des freigeschnittenen Werkstückteils ermittelt und somit geprüft werden, ob das freigeschnittene Werkstückteil verkippen würde.

Besondere Vorteile ergeben sich, wenn jedem ermittelten Abstand ein Vorzeichen zugeordnet wird. Jedem Abstand bzw. Hebelarm, der einem Kippen um eine Kippkante entgegenwirkt, kann beispielsweise ein positives Vorzeichen zugeordnet werden und jedem Hebelarm, der zu einem Kippen führen könnte, kann ein negatives Vorzeichen zugeordnet werden.

Gemäß einer weiteren Ausgestaltung des Verfahrens kann vorgesehen sein, dass für jede Kippkante ein Kippmoment für das alleinige Einwirken der Gewichtskraft des Werkstückteils sowie ein resultierendes Kippmoment für das gleichzeitige Einwirken von Prozesskraft und Gewichtskraft bestimmt werden und anschließend ein Minimum der so ermittelten Kippmomente gebildet und das Minimum mit einem Referenzwert verglichen wird. Der Referenzwert kann beispielsweise gleich Null gewählt werden. Wenn sich demnach ergibt, dass bei einer gewählten Freischneideposition das kleinste Kippmoment positiv ist, spricht das dafür, dass das Werkstückteil beim und nach dem Freischnitt nicht kippen würde. Um eine weitere Sicherheit einzubauen, kann der Referenzwert größer Null gewählt werden. Wenn demnach das kleinste Kippmoment größer als dieser positive Referenzwert ist, besteht Sicherheit, dass das freigeschnittene Werkstückteil für die überprüfte Freischneideposition nicht kippen würde.

Eine Freischneideposition für die Werkstückbearbeitung kann derart gewählt werden und/oder eine Bearbeitungsmaschine kann derart eingestellt werden, dass ein Kippen des freigeschnittenen Werkstückteils vermieden wird. Wenn demnach die Analyse bzw. Vorhersage gemäß dem erfindungsgemäßen Verfahren ergibt, dass für eine überprüfte Freischneideposition kein Verkippen des freigeschnittenen Werkstücks zu befürchten ist, kann die Freischneideposition beibehalten werden. Andernfalls kann eine andere Freischneideposition gewählt und überprüft werden. Alternativ ist es denkbar, das Werkstück oder das bzw. die Auflager anders zu positionieren, so dass für eine gewählte Freischneideposition kein Verkippen des freigeschnittenen Werkstückteils zu befürchten ist.

In den Rahmen der Erfindung fällt außerdem eine Bearbeitungsmaschine zur trennenden Bearbeitung eines plattenförmigen Werkstücks mittels eines Bearbeitungsstrahls mit den Merkmalen des Patentanspruchs 11.

Erfindungsgemäß wird demnach die Endlage eines freigeschnittenen Werkstückteils in einer Bearbeitungsmaschine für eine gewählte Freischneideposition ermittelt. Weiterhin können eine Gaskraft und die Schwerkraft des freigeschnittenen Werkstückteils ermittelt werden. Daraus kann über ein Kippmomentengleichgewicht und eine geometrisch ermittelte Kippkante bewertet werden, ob das freigeschnittene Werkstückteil verkippen wird. Anschließend kann ggf. eine neue Freischneideposition gewählt und/oder eine Position des Auflagers bzw. des Werkstücks geändert und erneut die Kippneigung des freigeschnittenen Werkstückteils geprüft werden, um schließlich eine Freischneideposition und/oder eine Lage des Auflagers relativ zum Werkstückteil zu ermitteln, bei der keine Kippneigung des Werkstückteils gegeben ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Figur 1    eine Darstellung eines Ausführungsbeispiels einer Laserbearbeitungsmaschine mit zwei in einem Spalt verfahrbaren Unterstützungsschlitten beim trennenden Bearbeiten eines plattenförmigen Werkstücks;

Figur 2    eine alternative Ausführungsform einer Laserbearbeitungsmaschine zum trennenden Bearbeiten eines plattenförmigen Werkstücks;

Figur 3    eine Skizze zur Erläuterung des erfindungsgemäßen Verfahrens bei der Auflage eines freigeschnittenen Werkstücks auf einem Auflager;

Figur 4    eine Darstellung zur Verdeutlichung des erfindungsgemäßen Verfahrens anhand eines Werkstücks, welches auf zwei Auflagern aufliegt.

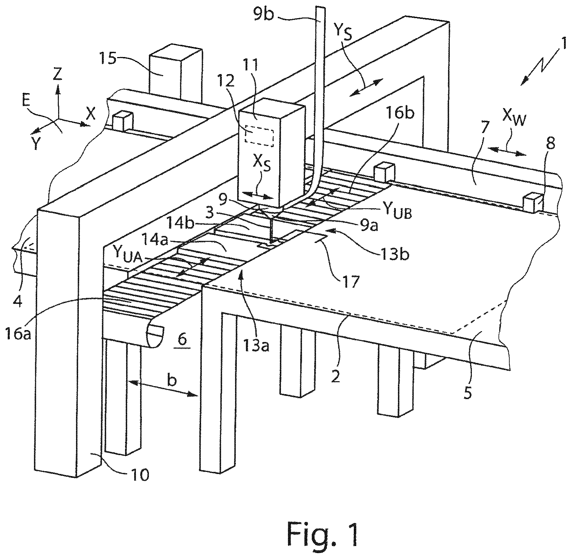

Figur 1 zeigt einen beispielhaften Aufbau einer Maschine 1 zur Laserbearbeitung, genauer gesagt zum Laserschneiden, eines gestrichelt dargestellten plattenförmigen Werkstücks 2 mittels eines Laserstrahls 3. Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden. Das Werkstück 2 liegt bei der Bearbeitung auf zwei Werkstückauflageflächen 4, 5 auf, die im gezeigten Beispiel die Oberseiten von zwei Werkstücktischen bilden und eine Auflageebene E (X-Y-Ebene eines XYZ-Koordinatensystems) zur Auflage des Werkstücks 2 definieren. Die Werkstückauflageflächen 4, 5 können durch Tischflächen oder durch stiftförmige Auflageelemente (Pins), Auflagebänder, Bürsten, Rollen, Kugeln, Luftpolster o.ä. gebildet werden.

Mittels einer herkömmlichen Bewegungs- und Halteeinrichtung 7, welche einen Antrieb sowie Klemmeneinrichtungen 8 in Form von Spannpratzen zum Festhalten des Werkstücks 2 aufweist, kann das Werkstück 2 auf den Werkstückauflageflächen 4, 5 in einer ersten Bewegungsrichtung X (im Folgenden: X-Richtung) gesteuert verschoben und an eine vorgegebene Werkstückposition Xw bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, die die eigentliche Auflageflächen 4, 5 darstellen. Alternativ ist es beispielsweise möglich, zur Bewegung oder zur Unterstützung der Bewegung des Werkstücks 2 in X-Richtung die Werkstückauflageflächen 4, 5 selbst als Bewegungseinrichtung auszugestalten, beispielsweise in Form eines (umlaufenden) Förderbandes, wie dies in der DE 10 2011 051 170 A1 der Anmelderin beschrieben ist, oder in Form einer Werkstückauflage, wie sie in der JP 06170469 beschrieben ist.

Zwischen den beiden Werkstückauflageflächen 4, 5 ist ein Spalt 6 gebildet, der sich in einer zweiten Richtung (im Folgenden: Y-Richtung) über den gesamten Verfahrweg eines als Laserschneidkopf ausgebildeten Bearbeitungskopfs 9 erstreckt, der den Laserstrahl 3 auf das Werkstück 2 ausrichtet und fokussiert. Der Bearbeitungskopf 9 ist mittels eines als Bewegungseinrichtung dienenden angetriebenen Schlittens 11, der an einem fest stehenden Portal 10 geführt ist, innerhalb des Spalts 6 in Y-Richtung gesteuert verfahrbar. Der Bearbeitungskopf 9 ist im gezeigten Beispiel innerhalb des Spalts 6 zusätzlich auch in X-Richtung gesteuert verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden. Der maximale Verfahrweg des Bearbeitungskopfs 9 in X-Richtung ist im gezeigten Beispiel geringer als die Breite b des Spalts 6.

Mithilfe der aufeinander aufbauenden Bewegungseinrichtungen 11, 12 kann der Bearbeitungskopf 9 sowohl in X-Richtung als auch in Y-Richtung an einer gewünschten Schneidkopfposition $X_S$, $Y_S$ innerhalb des Spalts 6 positioniert werden. Gegebenenfalls kann der Bearbeitungskopf 9 auch entlang einer dritten Bewegungsrichtung Z (Schwerkraftrichtung, im Folgenden: Z-Richtung) verschoben werden, um den Abstand zwischen der Bearbeitungsdüse 9a und der Werkstückoberfläche einzustellen. Aus der Bearbeitungsdüse 9a tritt in Z-Richtung nach unten ein Gas aus, welches dem Bearbeitungskopf 9 über lediglich angedeutete Gasleitungen 9b zugeführt wird.

Innerhalb des Spalts 6 sind zwei Unterstützungsschlitten 13a, 13b angeordnet, die sich jeweils über die gesamte Breite b des Spalts 6 erstrecken und in dem Spalt 6 in Y-Richtung gesteuert und unabhängig voneinander verfahrbar sind. Die gesteuerte Bewegung der Unterstützungsschlitten 13a, 13b in dem Spalt 6 kann beispielsweise mit Hilfe von Spindelantrieben erfolgen, wobei die Spindelmutter an dem jeweiligen Unterstützungsschlitten 13a, 13b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 13a, 13b in dem Spalt 6 auch auf andere Weise realisiert werden kann.

Die Unterstützungsschlitten 13a, 13b können in dem Spalt 6 jeweils an eine gewünschte Position $Y_{UA}$, $Y_{UB}$ in Y-Richtung bewegt werden, um dort das Werkstück 2, genauer gesagt von dem Werkstück 2 freizuschneidende bzw. beim Bearbeiten geschnittene Werkstückteile, mittels einem an dem jeweiligen Unterstützungsschlitten 13a, 13b angebrachten als Auflagefläche ausgebildeten Auflager 14a, 14b zu unterstützen. Die Auflagefläche eines jeweiligen Unterstützungsschlittens 13a, 13b schließt im gezeigten Fall in Z-Richtung bündig mit den Werkstückauflageflächen 4, 5 ab, d.h. die Auflageflächen befinden sich in der Auflageebene E für das Werkstück 2.

Zur Steuerung der schneidenden Bearbeitung weist die Maschine 1 eine Steuerungseinrichtung 15 auf, die zur Koordinierung der Bewegungen des Werkstücks 2, des Bearbeitungskopfs 9 sowie der Unterstützungsschlitten 13a, 13b dient, um eine gewünschte Werkstückposition Xw, eine gewünschte Schneidkopfposition $X_S$, $Y_S$ sowie eine gewünschte Position $Y_{UA}$, $Y_{UB}$ der Unterstützungsschlitten 13a, 13b einzustellen, um das Schneiden einer vorgegebenen Schnittkontur zu ermöglichen und das Werkstück falls erforderlich im Bereich des Spalts 6 zu unterstützen und insbesondere so zu positionieren, dass ein freigeschnittenes Werkstückteil 18 nicht von einem Auflager 14a, 14b abkippt. Das erfindungsgemäße Verfahren wird in der Steuerungseinrichtung 15 durchgeführt oder mit einem externen Programmiersystem, d.h. mit einer Programmiersoftware, die auf einem separaten Computer abläuft und die als Ergebnis ein Ablaufprogramm für die Bearbeitung des Werkstücks 2 erstellt.

Die Bezugsziffern 16a, 16b bezeichnen Überdeckungselemente zum Abdecken des Spalts 6.

Die Bewegung der Unterstützungsschlitten 13a, 13b kann synchron erfolgen, d.h. der Abstand zwischen der Position $Y_{UA}$ des ersten Unterstützungsschlittens 13a und der Position $Y_{UB}$ des zweiten Unterstützungsschlittens in Y-Richtung während der Bewegung ist konstant. Die Bewegung des ersten Unterstützungsschlittens 13a kann auch unabhängig von der Bewegung des zweiten Unterstützungsschlittens 13b erfolgen, d.h. der Abstand zwischen der Position $Y_{UA}$ des ersten Unterstützungsschlittens 13a und der Position $Y_{UB}$ des zweiten Unterstützungsschlittens 13b in Y-Richtung verändert sich während der Bewegung in Y-Richtung.

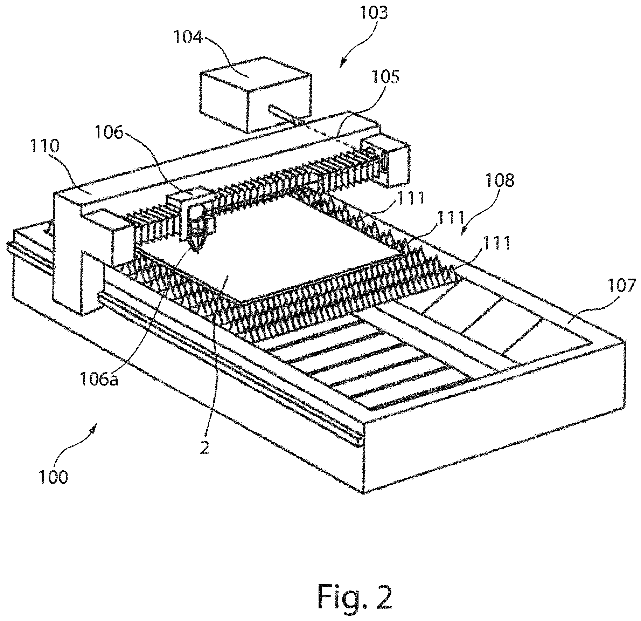

Die Figur 2 zeigt eine weitere Laserbearbeitungsmaschine 100 zum Laserschneiden von plattenförmigen Werkstücken 2. Die Laserbearbeitungsmaschine 100 umfasst eine Schneidvorrichtung 103 mit einem Lasergerät 104, einer externen Strahlführung 105 und einem Bearbeitungskopf 106, sowie einen Arbeitstisch 107 mit einer Werkstückauflage 108. Der Bearbeitungskopf 106 weist eine Bearbeitungsdüse 106a auf, aus der nach unten ein Gas austritt.

Der Bearbeitungskopf 106 ist an einem Querträger 110 angebracht und in einer Ebene parallel zu der Werkstückauflage 108 verfahrbar.

Die Werkstückauflage 108 ist durch eine Vielzahl von Auflagern 111 mit vorzugsweise dreieckig ausgebildeten Tragpunktspitzen gebildet, die eine Auflageebene für das zu bearbeitende Werkstück 2 definieren. Die Auflager 111 sind in einem vorbestimmten Raster angeordnet. Aus dem Werkstück 2 freigeschnittene Werkstückteile liegen ebenfalls auf den Auflagern 111 auf.

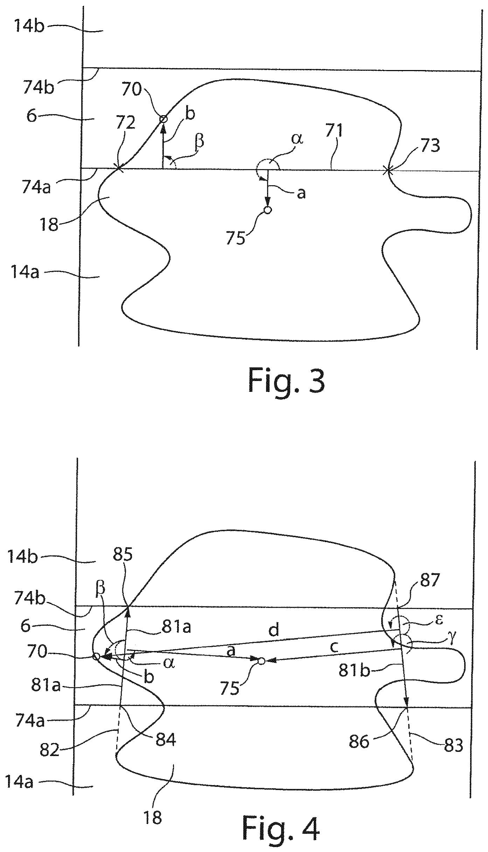

Die Figur 3 zeigt stark schematisiert den Spalt 6 der Laserbearbeitungsmaschine 1 gemäß der Figur 1. Zu sehen sind weiterhin die Auflager 14a, 14b sowie ein freigeschnittenes Werkstückteil 18. Dieses liegt lediglich auf dem Auflager 14a auf. Eine Freischneideposition ist mit der Bezugsziffer 70 gekennzeichnet. Um zu überprüfen, ob bei dieser Freischneideposition 70 ein Abkippen des Werkstückteils 18 zu befürchten ist, wird zunächst die Schnittlinie des Werkstückteils 18 mit dem Auflager 14a bestimmt. Dies ist die Linie zwischen den Schnittpunkten 72, 73. In diesem Fall fällt die Kippkante 71 zusammen mit der Auflagerkante 74a. Sodann wird der Abschnitt a bzw. Hebelarm des Schwerpunkts 75 des Werkstückteils 18 bestimmt. Ebenfalls wird der Abstand b bzw. Hebelarm der Freischneideposition 70 zur Kippkante 71 bestimmt. Das Vorzeichen der Hebelarme a, b wird über den Winkel $\alpha$ bzw. $\beta$ zur Kippkante 71 bestimmt. Der Winkel $\alpha$ ist größer als 180°. Daher wird dem Abstand a ein positives Vorzeichen zugeordnet. Der Winkel $\beta$ ist kleiner 180°. Daher wird dem Abstand b ein negatives Vorzeichen zugeordnet. Anschließend werden Kippmomente für unterschiedliche Zustände der Bearbeitungsmaschine 1 berechnet. Während einer Werkstückbearbeitung, d.h. während Gas in Richtung Werkstückteil 18 strömt, wirkt auf das Werkstückteil 18 das Kippmoment M1 = a x Gewichtskraft + b x Gaskraft. Wird dagegen das Gas abgeschaltet, wirkt auf das Werkstückteil 18 das Kippmoment M2 = a x Gewichtskraft.

Anschließend wird das Minimum der Kippmomente M1, M2 gebildet. Die Freischneideposition 70 führt nicht zu einem Abkippen des Werkstückteils 18, wenn das ermittelte minimale Kippmoment größer Null ist, wobei Null in diesem Fall als Referenzwert gewählt wurde. Wird ein Referenzwert größer Null gewählt und ist das minimale Kippmoment größer als dieser Referenzwert, wird eine Sicherheitsmarge eingehalten, so dass auf jeden Fall ein Abkippen des Werkstückteils 18 nicht erfolgt.

Bei der Situation, die in der Figur 4 gezeigt ist, liegt das Werkstückteil 18 auf beiden Auflagern 14a, 14b auf.

In diesem Fall ergeben sich die Kippkanten 81a, 81b indem zunächst Bereiche des Werkstückteils 18, die sich im Spalt 6, d.h. nicht über einem Auflager 14a, 14b befinden, ausgeblendet werden. Mit den verbleibenden Punkten des Werkstückteils 18 wird die konvexe Hülle des Werkstückteils 18 gebildet. Dies ist durch die gestrichelten Linien 82, 83 angedeutet. Es werden nun die Schnittpunkte 84 - 87 dieser zweidimensionalen konvexen Hülle mit den Auflagerkanten 74a, 74b ermittelt. Die die jeweils äußersten Schnittpunkte 84, 85 verbindende Gerade bildet die erste Kippkante 81a und die die Schnittpunkte 86, 87 verbindende Gerade bildet die zweite Kippkante 81b. Der Abstand a des Schwerpunkts 75 zur ersten Kippkante 81a wird ebenso ermittelt wie der Abstand b bzw. Hebelarm der Freischneideposition 70 zur ersten Kippkante 81a. Ebenfalls wird der Abstand c bzw. Hebelarm des Schwerpunkts 75 zur zweiten Kippkante 81b und der Abstand d bzw. Hebelarm der Freischneideposition 70 zur zweiten Kippkante 81b ermittelt. Den Abständen a, c, d wird ein positives Vorzeichen zugeordnet, da die Winkel $\alpha$, $\gamma$ und $\varepsilon$ größer 180° sind. Dem Abstand b wird ein negatives Vorzeichen zugeordnet, da der Winkel $\beta$ kleiner als 180° ist. Nun werden sämtliche mögliche Kippmomente für unterschiedliche Zustände der Bearbeitungsmaschine ermittelt:

$$M1 = a \times \text{Gewichtskraft} + b \times \text{Gaskraft}$$

$$M2 = a \times \text{Gewichtskraft}$$

$$M3 = c \times \text{Gewichtskraft} + d \times \text{Gaskraft}$$

$$M4 = c \times \text{Gewichtskraft}$$

Anschließend wird das kleinste Kippmoment als Ergebnis ausgegeben, indem das Minimum der Kippmomente M1 bis M4 gebildet wird. Wenn das kleinste Kippmoment positiv ist bzw. über einem vorgegebenen Referenzwert liegt, ist für die untersuchte Freischneideposition 70 in keinem Zustand der Bearbeitungsmaschine ein Verkippen des Werkstückteils 18 zu befürchten. Ist dagegen das kleinste ermittelte Kippmoment kleiner Null bzw. kleiner als ein vorgegebener Referenzwert, ist mit einem Verkippen zu rechnen, so dass die Bearbeitungsmaschine entsprechend programmiert werden muss, insbesondere die Position der Auflager 14a, 14b verändert werden muss oder die Freischneideposition 70 verändert werden muss, bis eine Analyse der Kippmomente ergibt, dass kein Verkippen zu befürchten ist.

**Patentansprüche**

1. Verfahren zur Vorhersage der Kippneigung eines bei einer trennenden Bearbeitung mittels einer Bearbeitungsmaschine (1, 100) aus einem Restwerkstück freigeschnittenen und auf einem oder mehreren Auflagern aufliegenden Werkstückteils (18), **gekennzeichnet durch** die Verfahrensschritte:

   a. Ermitteln einer oder mehrerer möglicher Kippkanten (71, 81a, 81b), um die das freigeschnittene Werkstückteil (18) kippen könnte;
   b. für zumindest eine mögliche Kippkante (71, 81a, 81b), insbesondere für jede mögliche Kippkante (71, 81a, 81b): Ermitteln von auf das Werkstückteil (18), insbesondere bei unterschiedlichen Zuständen der Bearbeitungsmaschine (1, 100), wirkenden Kippmomenten (M1 - M4), wobei die durch die Gewichtskraft des Werkstückteils (18) und durch die Prozesskraft eines auf das Werkstückteil (18) an einer Freischneideposition (70) einwirkenden Fluids ausgeübten Kippmomente (M1 - m4) ermittelt werden;
   c. anhand der ermittelten Kippmomente (M1 - M4): Ermitteln, ob das Werkstückteil (18) um eine Kippkante (71, 81a, 81b), kippen würde.

2. Verfahren nach Anspruch 1, **dadurch gekennzeichnet, dass** als Kippkante (71) die Schnittlinie des Werkstückteils (18) mit einer Auflagerkante (74a) bestimmt wird, wenn das Werkstückteil (18) lediglich auf einem Auflager (14b) aufliegt.

3. Verfahren nach Anspruch 1, **dadurch gekennzeichnet, dass** die Anteile des Werkstückteils (18), die zwischen Auflagern (14a, 14b) angeordnet sind, ausgeblendet werden und die konvexe Hülle des verbleibenden Werkstückteils (18) bestimmt wird, wobei die Kippkanten (81a, 81b) als diejenigen Verbindungsgeraden von den Schnittpunkte (84 - 87) der konvexen Hülle mit den Auflagerkanten (74a, 74b) bestimmt werden, die auf der Außengeometrie der konvexen Hülle liegen.

4. Verfahren nach einem der vorhergehenden Ansprüche, **dadurch gekennzeichnet, dass** für die Ermittlung der Kippmomente (M1 - M4) die Gewichtskraft des freigeschnittenen Werkstückteils (18), der Schwerpunkt (75) des Werkstückteils (18) und der Abstand (a - c) des Schwerpunkts (75) von einer Kippkante (71, 81a, 81b), insbesondere von jeder Kippkante (71, 81a, 81b), ermittelt werden.

5. Verfahren nach einem der vorhergehenden Ansprüche, **dadurch gekennzeichnet, dass** für die Ermittlung der Kippmomente (M1 - M4) eine in der Freischneideposition (70) wirkende Prozesskraft, insbesondere eine Gaskraft eines aus einem Bearbeitungskopf (9, 106) austretenden und auf das freigeschnittene Werkstückteil (18) auftreffenden Schneidgases, und der Abstand (b, d) der Freischneideposition (70) zu einer Kippkante (71, 81a, 81b), insbesondere zu jeder Kippkante (71, 81a, 81b), ermittelt werden.

6. Verfahren nach Anspruch 5, **dadurch gekennzeichnet, dass** die Prozesskraft, insbesondere die Gaskraft, aus dem Produkt des aus einer am Bearbeitungskopf (9,106) angeordneten Schneidgasdüse austretenden Schneidgases und dem Öffnungsdurchmesser der Schneidgasdüse ermittelt wird.

7. Verfahren nach einem der Ansprüche 4 bis 6, **dadurch gekennzeichnet, dass** jedem ermittelten Abstand (a, b, c, d) ein Vorzeichen zugeordnet wird.

8. Verfahren nach einem der vorhergehenden Ansprüche, **dadurch gekennzeichnet, dass** ein Minimum von ermittelten Kippmomenten (M1 - M4) gebildet wird und das ermittelte Minimum mit einem Referenzwert verglichen wird und eine Kippneigung des Werkstückteils (18) ermittelt wird, wenn das Minimum kleiner ist als der Referenzwert.

9. Verfahren nach einem der vorhergehenden Ansprüche, **dadurch gekennzeichnet, dass** eine Freischneideposition (70) derart gewählt wird und/oder eine Bearbeitungsmaschine (1, 100) derart eingestellt wird, dass ein Kippen des freigeschnittenen Werkstückteils (18) vermieden wird.

10. Verfahren zur Festlegung einer Freischneideposition (70) für ein bei einer trennenden Bearbeitung mittels einer Bearbeitungsmaschine (1, 100) aus einem Restwerkstück zuschneidendes und auf einem oder mehreren Auflagern aufliegendes Werkstückteil (18), **dadurch gekennzeichnet, dass** ein Verfahren zur Vorhersage der Kippneigung des Werkstückteils nach einem der Ansprüche 2 bis 9 so oft durchgeführt wird, bis eine Freischneideposition (70) derart gewählt ist, dass keine Kippneigung des freigeschnittenen Werkstückteils (18) ermittelt wird.

11. Bearbeitungsmaschine (1, 100) zur trennenden Bearbeitung eines plattenförmigen Werkstücks (2) mittels eines Bearbeitungsstrahls (3) mit einem den Bearbeitungsstrahl (3), insbesondere Laserstrahl, auf das plattenförmige Werkstück (2) ausrichtenden Bearbeitungskopf (9, 106) und zumindest einem Auflager (14a, 14b) auf dem ein durch trennende Bearbeitung freigeschnittenes Werkstückteil (18) aufliegen kann, **dadurch gekennzeichnet, dass** die Bearbeitungsmaschine (1, 100) eine Steuereinrichtung (15) aufweist, wobei die Steuereinrichtung (15) konfiguriert ist, die Verfahrensschritte gemäß eines der Ansprüche 1 bis 8 durchzuführen,

oder die Bearbeitungsmaschine (1, 100) eine Steuereinrichtung (15) und ein externes Programmiersystem, d. h. mit einer Programmiersoftware, die auf einem separaten Computer abläuft und die als Ergebnis ein Ablaufprogramm für die Bearbeitung des Werkstücks (2) erstellt, aufweist, wobei das externe Programmiersystem konfiguriert ist, die Verfahrensschritte gemäß eines der Ansprüche 1 bis 8 durchzuführen, und dass die Steuereinrichtung (15) unter Berücksichtigung der im Verfahren nach einem der Ansprüche 1 bis 8 ermittelten Kippneigung des freigeschnittenen Werkstückteils (18) so eingerichtet und/oder programmiert ist, dass das freigeschnittene Werkstückteil (18) nicht verkippt.

12. Bearbeitungsmaschine (1, 100) nach Anspruch 11, bei der die Steuereinrichtung (15) so eingerichtet und/oder programmiert ist, das Werkstückteil an einer Freischneideposition (70) freizuschneiden, die nach einem Verfahren gemäß Anspruch 10 ermittelt wurde.

## Claims

1. Method for predicting the tilt inclination of a workpiece portion (18) which is cut free from a remaining workpiece during a separating processing operation by means of a processing machine (1, 100) and which is positioned on one or more supports, **characterized by** the method steps of:

a. establishing one or more possible tilting edges (71, 81a, 81b), about which the workpiece portion (18) which has been cut free could tilt;

b. for at least one possible tilting edge (71, 81a, 81b), in particular for each possible tilting edge (71, 81a, 81b): establishing tilting moments (M1-M4) which act on the workpiece portion (18) in particular in different states of the processing machine (1, 100), wherein the tilting moments (M1-M4) which are applied as a result of the weight force of the workpiece portion (18) and those applied as a result of the process force of a fluid acting on the workpiece portion (18) at a free-cutting position (70) are established;

c. using the tilting moments (M1 - M4) which have been established: establishing whether the workpiece portion (18) would tilt about a tilting edge (71, 81a, 81b).

2. Method according to claim 1, **characterised in that** the intersection line of the workpiece portion (18) with a support edge (74a) is determined as a tilting edge (71) if the workpiece portion (18) is positioned only on one support (14b) .

3. Method according to claim 1, **characterised in that** the portions of the workpiece portion (18) which are arranged between supports (14a, 14b) are masked and the convex cover of the remaining workpiece portion (18) is determined, wherein the tilting edges (81a, 81b) are determined as the straight connection lines from the intersections (84-87) of the convex cover to the support edges (74a, 74b) which are located on the outer geometry of the convex cover.

4. Method according to any one of the preceding claims, **characterised in that**, in order to establish the tilting moments (M1-M4), the weight force of the workpiece portion (18) which has been cut free, the centre of gravity (75) of the workpiece portion (18) and the spacing (a-c) of the centre of gravity (75) from a tilting edge (71, 81a, 81b), in particular from each tilting edge (71, 81a, 81b), are established.

5. Method according to any one of the preceding claims, **characterised in that**, in order to establish the tilting moments (M1-M4) a process force acting in the free-cutting position (70), in particular a gas force of a cutting gas which is discharged from a processing head (9, 106) and which strikes the workpiece portion (18) which has been cut free and the spacing (b, d) of the free-cutting position (70) with respect to a tilting edge (71, 81a, 81b), in particular with respect to each tilting edge (71, 81a, 81b), are established.

6. Method according to claim 5, **characterised in that** the process force, in particular the gas force, is established from the product of the cutting gas which is being discharged from a cutting gas nozzle which is arranged on the processing head (9, 106) and the opening diameter of the cutting gas nozzle.

7. Method according to any one of claims 4 to 6, **characterised in that** a prefix is associated with each established spacing (a, b, c, d).

8. Method according to any one of the preceding claims, **characterised in that** a minimum of established tilting moments (M1-M4) is formed and the established minimum is compared with a reference value and a tilt inclination of the workpiece portion (18) is established when the minimum is less than the reference value.

9. Method according to any one of the preceding claims, **characterised in that** a free-cutting position (70) is selected in such a manner and/or a processing machine (1, 100) is adjusted in such a manner that tilting of the workpiece portion (18) which has been cut free is prevented.

10. Method for determining a free-cutting position (70) for a workpiece portion (18) which is intended to be cut from a remaining workpiece during a separating processing operation using a processing machine (1, 100) and which is positioned on one or more supports, **characterised in that** a method for predicting the tilt inclination of the workpiece portion according to any one of claims 2 to 9 is carried out until a free-cutting position (70) is selected in such a manner that no tilting inclination of the workpiece portion (18) which has been cut free is established.

11. Processing machine (1, 100) for a separating processing operation of a plate-like workpiece (2) using a processing beam (3) having a processing head (9, 106) which directs the processing beam (3), in particular laser beam, onto the plate-like workpiece (2), and at least one support (14a, 14b) on which a workpiece portion (18) which has been cut free by means of a separating processing operation can be positioned, **characterized in that** the processing machine (1, 100) has a control device (15), the control device (15) being configured to perform the method steps according to one of the claims 1 to 8,

or the processing machine (1, 100) comprises a control device (15) and an external programming system, i.e. with a programming software that runs on a separate computer and creates as a result a sequence program for processing the workpiece (2), wherein the external programming system is configured to perform the method steps according to one of the claims 1 to 8, and that

taking into account the tilt inclination of the workpiece portion (18) which has been cut free as established in the method according to any one of claims 1 to 8, the control device (15) is configured and/or programmed in such a manner that the workpiece portion (18) which has been cut free does not tilt.

12. Processing machine (1, 100) according to claim 11, wherein the control device (15) is configured and/or programmed to cut the workpiece portion free at a free-cutting position (70) which was established in accordance with a method according to claim 10.

**Revendications**

1. Procédé de prédiction de la tendance au basculement d'une partie (18) d'une pièce dissociée, par découpe, d'avec une partie restante de ladite pièce au cours d'un usinage séparatif au moyen d'une machine d'usinage (1, 100), et reposant sur un ou plusieurs support(s), **caractérisé par** les étapes opératoires consistant à :

   a. spécifier une ou plusieurs arête(s) de basculement (71, 81a, 81b) possible(s), autour de laquelle (desquelles) la partie (18) de la pièce, dissociée par découpe, serait susceptible de basculer ;
   b. pour au moins une arête de basculement (71, 81a, 81b) possible, en particulier pour chaque arête de basculement (71, 81a, 81b) possible : à spécifier des couples de basculement (M1-M4) agissant sur ladite partie (18) de la pièce, notamment dans différents états de ladite machine d'usinage (1, 100), ladite spécification portant sur les couples de basculement (M1-M4) appliqués sous l'effet de la force proportionnelle au poids de la partie (18) de la pièce, et de la force de processus d'un fluide agissant sur ladite partie (18) de la pièce en un emplacement (70) de séparation par découpe ;
   c. sur la base des couples de basculement (M1-M4) spécifiés : à spécifier si ladite partie (18) de la pièce basculerait autour d'une arête de basculement (71, 81a, 81b).

2. Procédé selon la revendication 1, **caractérisé par le fait que** la ligne d'intersection de la partie (18) de la pièce avec un bord d'appui (74a) est déterminée, en tant qu'arête de basculement (71), lorsque ladite partie (18) de la pièce repose uniquement sur un support (14b).

3. Procédé selon la revendication 1, **caractérisé par** un masquage des portions de la partie (18) de la pièce qui sont situées entre des supports (14a, 14b), et par une détermination de l'enveloppe convexe de la partie restante (18) de ladite pièce, les arêtes de basculement (81a, 81b) étant déterminées comme les lignes droites reliant les points d'intersection (84-87) de l'enveloppe convexe aux bords d'appui (74a, 74b) situés sur la géométrie extérieure de ladite enveloppe convexe.

4. Procédé selon l'une des revendications précédentes, **caractérisé par le fait que** la force proportionnelle au poids de la partie (18) de la pièce, dissociée par découpe, le centre de gravité (75) de ladite partie (18) de la pièce et la distance (a-c) comprise entre ledit centre de gravité (75) et une arête de basculement (71, 81a, 81b), en particulier chaque arête de basculement (71, 81a, 81b), sont spécifiés en vue de la spécification des couples de basculement (M1-M4).

5. Procédé selon l'une des revendications précédentes, **caractérisé par le fait qu'**une force de processus agissant à l'emplacement (70) de séparation par découpe, notamment une force d'un gaz de découpe sortant d'une tête d'usinage (9, 106) et agissant sur la partie (18) de la pièce dissociée par découpe, et la distance (b, d) comprise entre ledit emplacement (70) de séparation par découpe et une arête de basculement (71, 81a, 81b), en particulier chaque arête de basculement (71, 81a, 81b), sont spécifiées en vue de la spécification des couples de basculement (M1-M4).

6. Procédé selon la revendication 5, **caractérisé par le fait que** la force de processus, en particulier la force développée par le gaz, est spécifiée sur la base du produit du gaz de découpe sortant d'une buse de gaz de découpe implantée sur la tête d'usinage (9, 106), et du diamètre d'ouverture de ladite buse de gaz de découpe.

7. Procédé selon l'une des revendications 4 à 6, **caractérisé par le fait qu'**un signe est affecté à chaque distance (a, b, c, d) spécifiée.

8. Procédé selon l'une des revendications précédentes, **caractérisé par le fait qu'**il est formé un minimum de couples de basculement (M1-M4) spécifiés, le minimum spécifié est comparé à une valeur de référence, et une tendance au basculement de la partie (18) de la pièce est spécifiée lorsque ledit minimum est inférieur à ladite valeur de référence.

9. Procédé selon l'une des revendications précédentes, **caractérisé par le fait qu'**un emplacement (70) de séparation par découpe est choisi de façon telle, et/ou une machine d'usinage (1, 100) est réglée de façon telle qu'il soit évité un basculement de la partie (18) de la pièce, dissociée par découpe.

10. Procédé de définition d'un emplacement (70) de séparation par découpe dédié à une partie (18) d'une pièce devant être dissociée, par découpe, d'avec une partie restante de ladite pièce au cours d'un usinage séparatif au moyen d'une machine d'usinage (1, 100), et reposant sur un ou plusieurs support(s), **caractérisé par le fait qu'**un procédé conforme à l'une des revendications 2 à 9, conçu pour prédire la tendance au basculement de la partie de la pièce, est mis en œuvre avec une fréquence d'occurrence débouchant sur un choix d'emplacement (70) de séparation par découpe tel qu'aucune tendance au basculement de ladite partie (18) de la pièce, dissociée par découpe, ne soit spécifiée.

11. Machine d'usinage (1, 100) dévolue à l'usinage séparatif d'une pièce (2) en forme de plaque, au moyen d'un faisceau d'usinage (3), comprenant une tête d'usinage (9, 106) qui oriente, sur ladite pièce (2) en forme de plaque, ledit faisceau d'usinage (3) se présentant notamment comme un faisceau laser, et au moins un support (14a, 14b) sur lequel peut reposer une partie (18) de ladite pièce dissociée, par découpe, au moyen d'un usinage séparatif, **caractérisée par le fait que** la machine d'usinage (1, 100) est munie d'un dispositif de commande (15), lequel dispositif de commande (15) est configuré en vue d'exécuter les étapes opératoires conformes à l'une des revendications 1 à 8,

ou bien ladite machine d'usinage (1, 100) comprend un dispositif de commande (15) et un système de programmation externe, c'est-à-dire comportant un logiciel de programmation qui se déroule sur un ordinateur distinct et instaure, en tant que résultat, un programme de déroulement destiné à l'usinage de la pièce (2), ledit système de programmation externe étant configuré en vue d'exécuter les étapes opératoires conformes à l'une des revendications 1 à 8 ; et **par le fait que**
ledit dispositif de commande (15) est agencé et/ou programmé, avec prise en considération de la tendance au basculement de la partie (18) de la pièce dissociée par découpe, spécifiée dans le procédé conforme à l'une des revendications 1 à 8, de façon telle que ladite partie (18) de la pièce, dissociée par découpe, ne bascule pas.

12. Machine d'usinage (1, 100) selon la revendication 11, dans laquelle le dispositif de commande (15) est agencé et/ou programmé de manière à dissocier la partie de la pièce, par découpe, en un emplacement (70) de séparation par découpe spécifié selon un procédé conforme à la revendication 10.

**Fig. 1**

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013226818 A1
- WO 2007134631 A1
- US 20100193479 A1
- SU 1101402 A1
- DE 102012212566 A1
- DE 102011051170 A1
- JP 06170469 B